# EUROPÄISCHE PATENTSCHRIFT

(11) **EP 3 443 241 B1**
(45) Veröffentlichungstag und Bekanntmachung des Hinweises auf die Patenterteilung: **14.04.2021**
(21) Anmeldenummer: 17701448.7
(22) Anmeldetag: 19.01.2017
(51) Int. Cl.: F16G 1/10, F16G 1/28, B29D 29/08

(54) **ZAHNRIEMEN MIT GEWEBEBESCHICHTUNG**
TOOTHED BELT WITH WOVEN FABRIC LAYERING
COURROIE CRANTÉE REVÊTUE DE TISSU

(30) Priorität: 12.04.2016 DE 102016206029
(43) Veröffentlichungstag der Anmeldung: 20.02.2019
(73) Patentinhaber: ContiTech Antriebssysteme GmbH, 30165 Hannover (DE)
(72) Erfinder: KUCHARCZYK, Andre, 29499 Gülden (DE); GÖSER, Hubert, 29451 Dannenberg (DE)
(74) Vertreter: Continental Corporation
(86) Internationale Anmeldenummer: PCT/EP2017/051023
(87) Internationale Veröffentlichungsnummer: WO 2017/178123

(56) Entgegenhaltungen:
- EP-A2- 0 280 175
- US-A- 5 066 344
- US-A1- 2014 323 257

## Beschreibung

### Beschreibung

Die Erfindung betrifft einen Zahnriemen zur Verwendung in Zahntrieben, vorzugsweise einen Zahnriemen aus Polyurethan, der mindestens eine mit einem Zahnprofil versehene Antriebsseite aufweist und dessen Zahnprofil mit einer außenseitigen Gewebelage versehen ist. Im Zahntrieb greift der Zahnriemen kämmend in Zahnscheiben ein, die mit einem zum Zahnprofil des Riemens komplementären Zahnprofil versehen ist. Weiterhin betrifft die Erfindung ein Verfahren zur Herstellung eines solchen Zahnriemens.

Die hier angesprochenen Polyurethan-Zahnriemen werden so hergestellt, dass das Grundmaterial extrudiert wird. Während der Extrusion laufen in einer speziellen zugehörigen Austrittsdüse Festigkeitsträger bzw. Zugträger, die in aller Regel als Corde ausgebildet sind, in das extrudierte, noch warme relativ zähflüssige Material ein. Diese Corde nehmen im fertigen ausgehärteten Zahnriemen im Wesentlichen die Zugkräfte auf.

Das so entstandene noch zähflüssige Polyurethanmaterial mit den Zugträgern als Grundmaterial des Zahnriemens wird zwischen einem Band und einem mit einer Außenverzahnung versehenen Formrad unter Wärmeentzug zum fertigen Zahnriemen eingeformt, wobei das Band das Formrad über einen Umschlingungswinkel von ca. 200° unter Druck umschlingt. In den Fällen, in dem der Zahnriemen auf seiner verzahnten Seite mit einer Gewebebeschichtung versehen ist, läuft kurz vor Eintritt des Rohlings in den Umschlingungsbogen des Formrades ein Gewebe auf das Formrad auf, welches dann zusammen mit dem Rohling in die formgebend verzahnte Außenkontur des Formrades eingedrückt wird. Solche Gewebebeschichtungen sind bekannt und üblich z.B. zur Verschleißreduzierung und Geräuschminderung.

Üblicherweise wird bei solchen aus extrudierten Rohlingen hergestellten PU-Zahnriemen als Gewebeabdeckung/Gewebelage auf der Zahnseite ein Gewebe eingesetzt, welches in Längsrichtung gute Dehneigenschaften besitzt. In der Riemenherstellung wird dann bei der oben beschriebenen Ausformung der Zähne auf dem Formrad dieses Gewebe durch die hochviskose PU-Schmelze aufgedehnt und in die Verzahnung gepresst. Nachteiligerweise kann es dabei passieren, dass durch die Dehnung bei der Verformung das Gewebe entsprechend dünner wird, so dass die Gewebestruktur sich öffnen kann und es gelegentlich zu einem zu PU- Durchschlag/Durchtritt kommt. Ferner kann es passieren, dass bei zu geringem Schmelzendruck die Zähne nicht vollständig ausgeformt werden. Gerade bei nicht vollständig ausgeformten Zähnen oder bei Durchdrücken von Polyurethan kommt es auch vor, dass die im Betrieb geforderte Zahntragfähigkeit des Zahnriemens nicht erreicht wird.

Das Dokument US/2014/323257 offenbart einen ähnlichen Zahnriemen.

Für die Erfindung bestand also die Aufgabe, einen Zahnriemen und ein Verfahren zu seiner Herstellung bereitzustellen, bei denen die Nachteile eines Durchtritts von Grundmaterial des Zahnriemens vermieden werden und eine einwandfreie Einformung ermöglicht wird, so dass die Zahnriemen die im Stand der Technik bekannten Nachteile nicht mehr aufweisen.

Gelöst wird diese Aufgabe durch die Merkmale des Hauptanspruchs und des nebengeordneten Verfahrensanspruch. Weitere vorteilhafte Ausbildungen sind in den jeweiligen Unteransprüchen offenbart.

Dabei weist die Gewebelage auf ihrer dem Zahnprofil abgewandten Außenseite eine Beschichtung aus Kunststoff auf, vorzugsweise aus Polyethylen. Diese Gewebelage ist in Bezug auf ihre Dicke einerseits auf ihrer dem Zahnprofil zugewandten Seite mindestens teilweise von Grundmaterial des Zahnriemens und auf ihrer Außenseite mindestens teilweise und so von der Kunststoffbeschichtung durchdrungen ist, dass die Gewebelage in einem in Bezug auf ihre Dicke innenliegenden Dickenbereich frei von Durchdringungsmaterial ist.

Insbesondere im Zusammenspiel damit, dass die Gewebelage außenseitig nur bis zu einer Eindringtiefe von 5 - 50 % der Lagendicke, d.h. der Gewebedicke von der Kunststoffbeschichtung durchdrungen ist, lässt sich ein eine Verschiebung oder eine Verzerrung der Gewebestruktur sicher vermeiden und die ursprüngliche Dehnfähigkeit des Gewebes und die geforderte Zahntragfähigkeit erhalten.

Zur Herstellung dient vorteilhafterweise das erfindungsgemäße Verfahren, bei dem
a) das Grundmaterial des Zahnriemens zunächst extrudiert wird,
b) während der Extrusion der zugehörigen Austrittsdüse des Extruders Festigkeitsträger bzw. Zugträger in das extrudierte Material einlaufen,
c) der so entstandene Rohling mit Zugträgern zwischen einem auf seinem Außenumfang mit dem Negativ der Verzahnung versehenen Formrad und einem das Formrad umlaufenden Band unter Wärmeentzug zum fertigen Zahnriemen eingeformt wird, wobei das Band das Formrad über einen Umschlingungswinkel von ca. 200° unter Druck umschlingt,
d) kurz vor Eintritt des Rohlings in den Umschlingungsbogen des Formrades eine Gewebelage auf das Formrad aufläuft, welches dann zusammen mit dem Rohling in die formgebend verzahnte Außenkontur des Formrades eingedrückt wird,
e) die Gewebelage auf ihrer dem Formrad zugewandten Seite vor dem Einlaufen auf das Formrad mit einer Beschichtung aus Kunststoff, vorzugsweise Polyethylen, so versehen wird, dass die Gewebelage bis zu einer Eindringtiefe von 5 - 50 % der Lagendicke (Gewebedicke) von der Kunststoffbeschichtung durchdrungen ist,
f) die beschichtete Gewebelage danach so vorgeformt wird, dass sie bereits vor Einlaufen auf das Formrad im Wesentlichen die Geometrie der Zahnform des Formrades aufweist,
g) wonach die mit der Zahnform vorgeformte Gewebelage kämmend auf das Formrad aufläuft und zusammen mit dem Rohling in die formgebend verzahnte Außenkontur des Formrades eingedrückt wird,
wobei die Viskosität des aus thermoplastischem Polyurethan bestehenden Grundmaterial des Zahnriemens so eingestellt ist, dass die mit der Zahnform vorgeformte und kunststoffbeschichtete Gewebelage soweit in den Rohling eingedrückt wird, dass die Gewebelage in einem in Bezug auf ihre Dicke innenliegenden Dickenbereich nicht von Polyurethan durchdrungen wird.

Die vorgeformte Gewebelage läuft damit kämmend und synchron auf das Formrad auf und wird zusammen mit dem Rohling in die verzahnte Außenkontur des Formrades eingedrückt. Dabei wird dann also nur noch das Grundmaterial verformt und es muss nicht mehr die Gewebelage als solche durch den im Grundmaterial entstehenden Druck noch in die Zähne des Formrades eingedrückt werden.

Damit lässt sich natürlich auch die Eindringtiefe des Rohmaterials in die Gewebelage viel präziser einstellen als bei den herkömmlichen Verfahren. Das unterstützt die Ausbildung des Zahnriemens so, dass die Gewebelage in einem in Bezug auf ihre Dicke innenliegenden Dickenbereich frei von Durchdringungsmaterial ist, also frei von etwa Polyurethan des Grund- oder Rohmaterials und auch von dem Polyethylen der Beschichtung, so dass es möglich wird, die zur Beschichtung genutzte Gewebelage so zu gestalten, dass der innenliegende Dickenbereich der Gewebelage ohne Durchdringungsmaterial 5 - 50 % der Lagendicke (Gewebedicke) beträgt, vorzugsweise zwischen 5 und 30% der Lagendicke ausmacht.

Der besondere Vorteil einer solchen Ausbildung des Zahnriemens besteht darin, dass durch den speziellen Aufbau des Gewebes die Oberflächenspannungen an den Zahnflanken beim Einzahnen in die Zahnscheiben reduziert werden. Dadurch wird der Zahnverschleiß reduziert und die Lebensdauer entsprechend erhöht. Durch das neue Gewebe und dessen innenliegendem Dickenbereich ohne Durchdringungsmaterial wird u.a. erreicht, dass sich die Außenbeschichtung (PE-Folie) nahezu kraftfrei im Verhältnis zur inneren Struktur Riemenzahn verschieben kann.

Eine weitere vorteilhafte Ausbildung in Bezug auf die Dehnfähigkeit des Zahnriemens besteht darin, dass das die Gewebelage bildende Gewebe aus Kett- und Schussfäden besteht, wobei die Kettfäden in oder im Wesentlichen parallel zur Riemenlängsachse ausgerichtet sind. Allein durch die Anordnung der längeren Kettfäden in Zahnriemen-Längsrichtung ergibt sich bereits eine bessere Dehnfähigkeit. Dies wird weiter vorteilhaft dadurch verbessert, dass die Kettfäden texturiert ausgebildet sind oder eine Kräuselung aufweisen.

Eine weitere vorteilhafte Ausbildung besteht darin, dass auch die Schussfäden alternativ oder additiv texturiert sind oder eine Kräuselung aufweisen, die eine erhöhte Dehnung der Kettfäden zulässt. Damit können nämlich auf einfache Weise auch Querverschiebungen, wie Sie zum Beispiel durch den Anlauf von Zahnriemen an Bordscheiben entstehen, einfach abgefedert/abgepuffert werden. Die Dehnfähigkeit des Gewebes kann auch durch die Webart und nicht nur durch die Textur der Garne erzeugt werden.

Durch die erfindungsgemäße Ausbildung der Gewebelage wird erreicht, dass sich die Außenbeschichtung (PE-Folie) nahezu kraftfrei zum inneren Riemenzahn verschieben kann. Die Verschiebung erfolgt über das Aufdehnen der Kettgarn- Textur.

Beim Zahneingriff in die Zahnscheibe und beim Umlauf um die Zahnscheibe erfolgen in der Regel kleine Bewegungen zwischen den Riemenzähnen und der Scheibenverzahnung. Bei entsprechenden Kräften erzeugen diese Bewegungen hohe Scherkräfte was zu einem starken Abrieb an der Zahnoberfläche der Riemenzähne führt. Mit der erfindungsgemäßen Gewebelage werden diese Bewegungen in der freien "nicht durchdrungenen Gewebezwischenschicht" weggepuffert, d.h. kompensiert.

Die Gewebelage des erfindungsgemäßen Zahnriemens weist also ein Gewebe auf, welches durch texturierte Kettfäden sehr gute Dehneigenschaften in Riemenumfangsrichtung bereitstellt. Dieses Gewebe wird einseitig so mit einem PE- Folie beschichtet, dass dieser Kunststoff in die Gewebeoberfläche eindringt. Die Eindringtiefe wird dabei so eingestellt, dass je nach späterer Belastung zwischen 5 und 50 % erreicht werden.

Nun wird dieses Gewebe/Laminat so vorgeformt, dass es die Geometrie der Verzahnung einnimmt, wobei aber auch ein Großteil der Textur der Kettfäden erhalten bleibt.

Bei der Riemenherstellung wird die beschichtete Gewebelage dann so dem Formrad/der Formtrommel zugeführt, dass die beschichtete Seite zur Formoberfläche zeigt. Auf die unbeschichtete Seite legt sich in dem genannten Verfahren nun das thermoplastische PU, welches durch Druck ebenfalls - auf der quasi noch freien Seite - in die Oberfläche der Gewebelage eindringt. Dabei wird der Herstellprozess so gesteuert, dass das Gewebe nicht vollständig mit PU gefüllt wird. Zwischen dem Bereich, der mit PE- Folie gefüllt ist und dem Bereich der mit PU gefüllt ist, sind dann zwischen 5 und 50 % , vorzugsweise zwischen 5 und 30%, des Gewebes nicht gefüllt.

Anhand eines Ausführungsbeispiels soll die Erfindung näher erläutert werden. Es zeigen
- Fig. 1: einen Teil eines erfindungsgemäßen Zahnriemens,
- Fig. 2: eine prinzipielle Darstellung des Aufbaus des erfindungsgemäßen Zahnriemens mit der Verzahnung in einer Vergrößerung des Details "A" der Figur 1
- Fig. 3: Eine Vergrößerung des Details "A" der Figur 1 unter Scherkraftbelastung

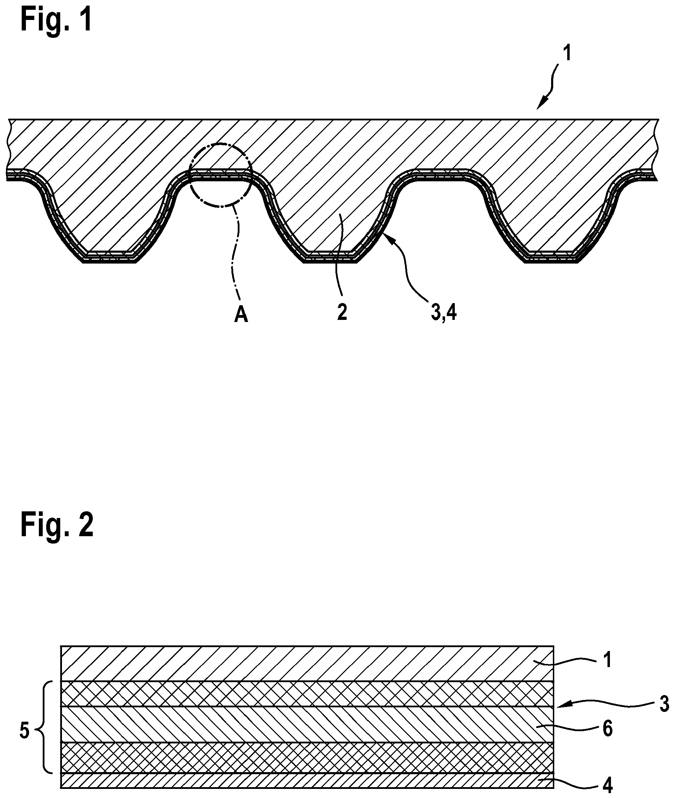

Figur 1 zeigt einen Teil eines PU-Zahnriemen 1, dessen Zahnprofil 2 mit einer außenseitigen Gewebelage 3 versehen ist. Die Gewebelage 3 weist auf ihrer dem Zahnprofil abgewandten Außenseite eine Beschichtung 4 aus Polyethylen auf, wie insbesondere in der Zusammenschau mit der Vergrößerung des Details "A" aus der Figur 1 in der Figur 2 deutlich wird. Die Gewebelage 3 ist in Bezug auf ihre Dicke 5 einerseits auf ihrer dem Zahnprofil zugewandten Seite mindestens teilweise von Grundmaterial des Zahnriemens durchdrungen, während sie auf ihrer Außenseite mindestens teilweise von der Polyethylenbeschichtung 4 durchdrungen ist.

Die Fig. 1 und 2 zeigen damit als prinzipielle Darstellungen des Aufbaus des erfindungsgemäßen Zahnriemens, wie sich die Merkmale des gegenständlichen Zahnriemens gestalten, d.h. in welcher Art und Weise auf dem eigentlichen Rohmaterial des Zahnriemens (PU) die Gewebelage aufgelegt und ihrerseits wiederum mit einer Außenbeschichtung (PE) versehen ist.

Die Eindringtiefe der Polyethylenbeschichtung 4 in die Gewebelage 3 beträgt hier 37 % der Lagendicke , d.h. der Gewebedicke 5. Die Gewebelage ist in einem innenliegenden Dickenbereich 6 frei von Durchdringungsmaterial ist, das heißt sowohl frei von Polyethylenmaterial als auch frei von Polyurethan-Grundmaterial des Zahnriemens.

Bei dem erfindungsgemäßen Zahnriemen wird also bereits bei der Herstellung die Gewebelage vorgeformt, so dass sie schon das Verzahnungsprofil besitzt und nicht mehr aufgedehnt und in die Verzahnung gepresst werden muss. Damit vereint vermeidet man ein Durchtreten bzw. eine Durchschlag des PU Materials bei der Einformung und erreicht eine 100%- ige Ausformung der Zähne. Durch den speziellen Aufbau der Gewebelage werden im Betrieb / im Zahnriementrieb unter Belastung die Oberflächenspannungen an den Zahnflanken beim kämmenden Einlauf in die Zahnscheiben reduziert. Dadurch wird der Zahnverschleiß reduziert und die Lebensdauer entsprechend erhöht.

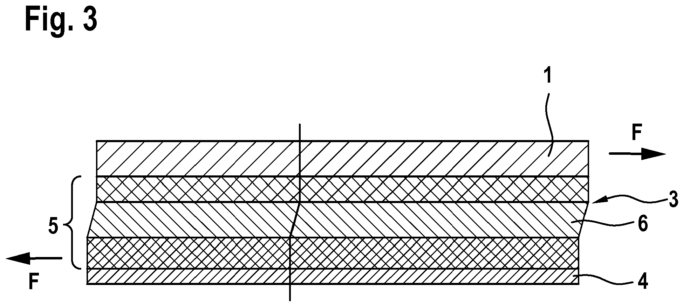

Fig. 3 zeigt dies anhand des Details "A" der Figur 1 noch einmal sehr deutlich, nämlich dass sich unter Scherkraftbelastung die Außenbeschichtung, d.h. hier die PE-Folie 4 nahezu kraftfrei im Verhältnis zur inneren Struktur des Riemenzahns verschieben kann Der besondere Vorteil einer solchen Ausbildung des Zahnriemens 1 besteht darin, dass durch diesen speziellen Aufbau des Gewebes mit einem nicht durchdrungenen Dickenbereich 6 die Oberflächenspannungen an den Zahnflanken beim Einzahnen in die Zahnscheiben reduziert werden können. Dadurch wird der Zahnverschleiß reduziert und die Lebensdauer entsprechend erhöht.

### Bezugszeichenliste (Teil der Beschreibung)

- 1: Zahnriemen
- 2: Zahnprofil
- 3: Gewebelage
- 4: Beschichtung der Gewebelage / Polyethylen (PE) Beschichtung
- 5: Dicke der Gewebelage
- 6: innenliegender nicht durchdrungener Dickenbereich

## Patentansprüche

1. Zahnriemen (1), vorzugsweise PU-Zahnriemen, der mindestens eine mit einem Zahnprofil (2) versehene Antriebsseite aufweist und dessen Zahnprofil (2) mit einer außenseitigen Gewebelage (3) versehen ist, wobei die Gewebelage (3) auf ihrer dem Zahnprofil (2) abgewandten Außenseite eine Beschichtung (4) aus Kunststoff aufweist, vorzugsweise aus Polyethylen, wobei die Gewebelage (3) in Bezug auf ihre Dicke (5) einerseits auf ihrer dem Zahnprofil zugewandten Seite mindestens teilweise von Grundmaterial des Zahnriemens (1) und auf ihrer Außenseite mindestens teilweise und von der Kunststoffbeschichtung (4) durchdrungen ist, **dadurch gekennzeichnet, dass** die Gewebelage in einem in Bezug auf ihre Dicke (5) innenliegenden Dickenbereich (6) frei von Durchdringungsmaterial ist, wobei der innenliegende Dickenbereich (6) der Gewebelage ohne Durchdringungsmaterial 5 - 50 % der Gewebelagendicke (5) beträgt, vorzugsweise zwischen 5 und 30% der Gewebelagendicke (5) ausmacht, so dass zwischen dem Bereich, der mit Kunststoffbeschichtung gefüllt ist und dem Bereich, der mit Grundmaterial gefüllt ist, zwischen 5 und 50 % , vorzugsweise zwischen 5 und 30%, der Gewebelage nicht gefüllt sind.

2. Zahnriemen nach Anspruch 1, bei dem die Gewebelage (3) außenseitig bis zu einer Eindringtiefe von 5 - 50 % der Gewebelagendicke (5) von der Kunststoffbeschichtung durchdrungen ist.

3. Zahnriemen nach einem der Ansprüche 1 bis 2 , bei dem das die Gewebelage bildende Gewebe aus Kett- und Schussfäden besteht, wobei die Kettfäden in oder im Wesentlichen parallel zur Riemenlängsachse ausgerichtet sind.

4. Zahnriemen nach Anspruch 3 bei dem die Kettfäden texturiert sind oder eine Kräuselung aufweisen.

5. Zahnriemen nach einem der Ansprüche 1 bis 4 , bei dem die Schussfäden alternativ oder additiv texturiert sind oder eine Kräuselung aufweisen.

6. Zahnriemen nach einem der Ansprüche 1 bis 5, bei dem das Grundmaterial im Wesentlichen aus extrudierbarem, thermoplastischem Polyurethan besteht.

7. Verfahren zur Herstellung eines Zahnriemens aus thermoplastischem Polyurethan nach Anspruch 1 bis 6, bei dem
a) das Grundmaterial des Zahnriemens zunächst extrudiert wird,
b) während der Extrusion der zugehörigen Austrittsdüse des Extruders Festigkeitsträger bzw. Zugträger in das extrudierte Material einlaufen,
c) der so entstandene Rohling mit Zugträgern zwischen einem auf seinem Außenumfang mit dem Negativ der Verzahnung versehenen Formrad und einem das Formrad umlaufenden Band unter Wärmeentzug zum fertigen Zahnriemen eingeformt wird, wobei das Band das Formrad über einen Umschlingungswinkel von ca. 200° unter Druck umschlingt,
d) kurz vor Eintritt des Rohlings in den Umschlingungsbogen des Formrades eine Gewebelage auf das Formrad aufläuft, welches dann zusammen mit dem Rohling in die formgebend verzahnte Außenkontur des Formrades eingedrückt wird, wobei
i) die Gewebelage auf ihrer dem Formrad zugewandten Seite vor dem Einlaufen auf das Formrad mit einer Beschichtung aus Kunststoff, vorzugsweise Polyethylen, so versehen wurde, dass die Gewebelage bis zu einer Eindringtiefe von 5-50 % der Lagendicke (Gewebedicke) von der Kunststoffbeschichtung durchdrungen ist,
ii) die beschichtete Gewebelage danach so vorgeformt wurde, dass sie bereits vor Einlaufen auf das Formrad im Wesentlichen die Geometrie der Zahnform des Formrades aufweist,
e) wonach die mit der Zahnform vorgeformte Gewebelage kämmend auf das Formrad aufläuft und zusammen mit dem Rohling in die formgebend verzahnte Außenkontur des Formrades eingedrückt wird.
**dadurch gekennzeichnet, dass**
die Viskosität des aus thermoplastischem Polyurethan bestehenden Grundmaterial des Zahnriemens so eingestellt ist, dass die mit der Zahnform vorgeformte und kunststoffbeschichtete Gewebelage (3) soweit in den Rohling eingedrückt wird, dass die Gewebelage (3) in einem in Bezug auf ihre Dicke (5) innenliegenden Dickenbereich (6) nicht von Polyurethan durchdrungen wird

8. Verfahren nach Anspruch 7, bei dem die die beschichtete Gewebelage so vorgeformt wird, dass eine vorgegebene Textur oder Kräuselung der Kettfäden des die Gewebelage bildenden Gewebes erhalten bleibt.

## Claims

1. Toothed belt (1), preferably toothed PU belt, having at least one drive side provided with a tooth profile (2), the tooth profile (2) of which has been provided with a woven ply (3) on the outside, wherein the woven ply (3) has, on its outside remote from the tooth profile (2), a coating (4) of polymer, preferably of polyethylene, where the woven ply (3), in relation to its thickness (5), has firstly been penetrated at least partly on its side facing the tooth profile by base material of the toothed belt (1) and at least partly on its outside by the polymer coating (4), **characterized in that**
the woven ply is free of penetration material in a thickness region (6) on the inside in relation to its thickness (5), wherein the inner thickness region (6) of the woven ply without penetration material is 5-50% of the woven ply thickness (5), preferably makes up between 5% and 30% of the woven ply thickness (5), such that between 5% and 50%, preferably between 5% and 30%, of the woven ply between the region filled with polymer coating and the region filled with base material is unfilled.

2. Toothed belt according to Claim 1, in which the woven ply (3) has been penetrated by the polymer coating on the outside up to a penetration depth of 5-50% of the woven ply thickness (5).

3. Toothed belt according to either of Claims 1 and 2, in which the weave that forms the woven ply consists of warp and weft threads, where the warp threads are aligned parallel or essentially parallel to the longitudinal belt axis.

4. Toothed belt according to Claim 3, in which the warp threads have been textured or crimped.

5. Toothed belt according to any of Claims 1 to 4, in which the weft threads have been alternatively or additively textured or crimped.

6. Toothed belt according to any of Claims 1 to 5, in which the base material consists essentially of extrudable thermoplastic polyurethane.

7. Process for producing a toothed belt from thermoplastic polyurethane according to Claims 1 to 6, in which
a) the base material of the toothed belt is first extruded,
b) during the extrusion of the corresponding exit die of the extruder strengthening elements or tensile elements are incorporated into the extruded material,
c) the resultant precursor is formed together with tensile elements between a forming wheel provided with the negative of the tooth pattern on its outer circumference and a belt that runs around the forming wheel with removal of heat to give the finished toothed belt, where the belt wraps around the forming wheel over a wrap angle of about 200° under pressure,
d) shortly before the precursor enters the wrapping arc of the forming wheel a woven ply runs onto the forming wheel and is then indented together with the precursor into the shapingly toothed outline of the forming wheel,
wherein
i) the woven ply, on its side facing the forming wheel, before running into the forming wheel, has been provided with a coating of polymer, preferably polyethylene, such that the woven ply has been penetrated up to a penetration depth of 5-50% of the ply thickness (weave thickness) by the polymer coating,
ii) the coated woven ply has then been preformed such that it already has essentially the geometry of the toothed form of the forming wheel even before it runs into the forming wheel,
e) and then the woven ply preformed with the toothed form intermeshes with the forming wheel and is indented into the shapingly toothed outline of the forming wheel together with the precursor,
**characterized in that**
the viscosity of the base material of the toothed belt that consists of thermoplastic polyurethane is adjusted such that the polymer-coated woven ply (3) preformed with the toothed form is indented into the precursor such that the woven ply (3) is not penetrated by polyurethane in a thickness region (6) on the inside in relation to its thickness (5).

8. Process according to Claim 7,
in which the coated woven ply is preformed such that a defined texture or crimping of the warp threads of the weave that forms the woven ply is conserved.

## Revendications

1. Courroie crantée (1), de préférence courroie crantée en PU, qui comporte au moins un côté entraînement pourvu d'un profil de cran (2) et dont le profil de cran (2) est pourvu d'une couche de tissu extérieure (3), la couche de tissu (3) comportant sur son côté extérieur, tourné à l'opposé du profil de cran (2), un revêtement (4) en matière synthétique, de préférence en polyéthylène, la couche de tissu (3) étant traversée, dans son épaisseur (5), d'une part sur son côté tourné vers le profil de cran au moins partiellement par le matériau de base de la courroie crantée (1) et sur son côté extérieur au moins partiellement par le revêtement (4) de matière synthétique, **caractérisée en ce que**
la couche de tissu est dépourvue de matière pénétrante dans une zone d'épaisseur intérieure (6) dans son épaisseur (5), la zone d'épaisseur intérieure (6) de la couche de tissu sans matériau de pénétration étant de 5 à 50 % de l'épaisseur de couche de tissu (5), de préférence entre 5 et 30 % de l'épaisseur de couche de tissu (5) de sorte que, entre la zone remplie de revêtement de matière synthétique et la zone remplie de matériau de base, entre 5 et 50 %, de préférence entre 5 et 30 %, de la couche de tissu ne soient pas remplis.

2. Courroie crantée selon la revendication 1, dans laquelle la couche de tissu (3) est traversée du côté extérieur par le revêtement de matière synthétique jusqu'à une profondeur de pénétration de 5 à 50 % de l'épaisseur de couche de tissu (5).

3. Courroie crantée selon l'une des revendications 1 à 2, dans laquelle le tissu formant la couche de tissu comprend des fils de chaîne et de trame, les fils de chaîne étant orientés suivant l'axe longitudinal de la courroie ou sensiblement parallèlement à celui-ci.

4. Courroie crantée selon la revendication 3, dans laquelle les fils de chaîne sont texturés ou comportent un frisage.

5. Courroie crantée selon l'une des revendications 1 à 4, dans laquelle les fils de trame sont texturés alternativement ou additivement ou comportent un frisage.

6. Courroie crantée selon l'une des revendications 1 à 5, dans lequel le matériau de base comprend sensiblement du polyuréthane thermoplastique extrudable.

7. Procédé de fabrication d'une courroie crantée en polyuréthane thermoplastique selon les revendications 1 à 6, dans lequel
a) le matériau de base de la courroie crantée est d'abord extrudé,
b) lors de l'extrusion de la buse de sortie associée de l'extrudeuse, des renforts ou des éléments de tension pénètrent dans le matériau extrudé,
c) l'ébauche résultante pourvue d'éléments de tension est formée entre une roue de formage, pourvue du négatif du crantage sur sa périphérie extérieure, et une bande, circulant autour de la roue de formage, avec dégagement de chaleur pour former la courroie crantée finie, la bande s'enroulant sous pression autour de la roue de formage sur un angle d'enroulement d'environ 200°,
d) peu avant que l'ébauche n'entre dans l'arc d'enroulement de la roue de formage, une couche de tissu passe sur la roue de formage et est ensuite pressée conjointement avec l'ébauche dans le contour extérieur cranté de formage de la roue de formage,
i) la couche de tissu ayant été pourvue d'un revêtement en matière synthétique, de préférence en polyéthylène, sur son côté tourné vers la roue de formage, avant de passer sur la roue de formage de sorte que la couche de tissu soit traversée par le revêtement de matière synthétique jusqu'à une profondeur de pénétration de 5 à 50 % de l'épaisseur de couche (épaisseur de tissu),
ii)la couche de tissu revêtue ayant ensuite été préformée de manière à avoir déjà sensiblement la géométrie de la forme crantée de la roue de formage avant de passer sur la roue de formage,
e) puis la couche de tissu préformée avec la forme crantée passe sur la roue de formage d'une manière à s'engrener avec celle-ci et est enfoncée conjointement avec l'ébauche dans le contour extérieur cranté de formage de la roue de formage,
**caractérisé en ce que**
la viscosité du matériau de base en polyuréthane thermoplastique de la courroie crantée est réglée de sorte que la couche de tissu (3) préformée avec la forme crantée et revêtue de matière synthétique soit enfoncée dans l'ébauche à un point tel que la couche de tissu (3) ne soit pas traversée par le polyuréthane dans une région située à l'intérieur (6) relativement à son épaisseur (5).

8. Procédé selon la revendication 7, dans lequel la couche de tissu revêtue est préformée de manière à ce qu'une texture ou un frisage prédéterminé des fils de chaîne du tissu formant la couche de tissu soit conservée.
